# EUROPEAN PATENT APPLICATION

(11) **EP 4 091 456 A1**
(43) Date of publication of application: **23.11.2022**
(21) Application number: 21741388.9
(22) Date of filing: 14.01.2021
(51) Int. Cl.: A21C 9/06, A23P 20/25

(54) **SEMI-FINISHED FOOD PRODUCT ANGLE ADJUSTMENT METHOD AND ANGLE ADJUSTMENT MECHANISM**

(30) Priority: 15.01.2020 CN 202010043977
(71) Applicant: Zhang, Tongqi, Tianjin 300000 (CN)
(72) Inventor: ZHAO, Baoqing, Tianjin 300000 (CN); ZHANG, Tongqi, Tianjin 300000 (CN)
(74) Representative: Botti, Mario
(86) International application number: PCT/CN2021/071770
(87) International publication number: WO 2021/143772

(57) **Abstract**

Disclosed is an angle adjustment method for food blanks including: fixing a fixing device to a first corner of a wrapping skin at a first station; driving the fixing device to move to a second station by a moving driving member to drag the wrapping skin; and when dragging the wrapping skin, driving the fixing device to rotate by a rotation driving member. The present invention also provides an angle adjustment mechanism for food blanks for implementing the above method. The angle adjustment method and mechanism for food blanks according to the present invention can adjust the angle of the food blanks and rotate the first corner of the wrapping skin to a specified angle to facilitate subsequent processing. Additionally, the wrapping skin has high angle adjustment accuracy, and the angle adjustment mechanism operates stably, avoiding damage to the wrapping skin and throwing off the filling on the wrapping skin.

## Description

### TECHNICAL FIELD

The present invention relates to an angle adjustment method and angle adjustment mechanism for food blanks, belonging to the technical field of food processing.

### BACKGROUND

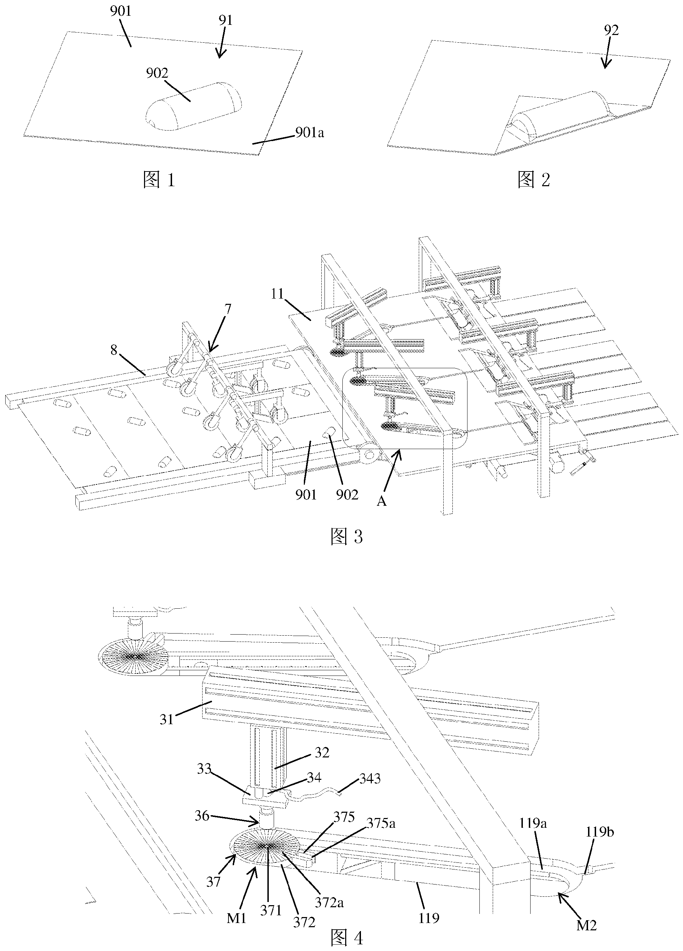

In the field of food processing, food are often processed with forming machines. But for rolled foods such as spring rolls, it is particularly difficult to automate production due to their unique structure and shape. Its forming is still carried out in a semi-automatic way, in which only mechanical peeling and automatic filling can be realized. The subsequent steps can only rely on manual folding and rolling, resulting in low efficiency and high personnel costs. On the other hand, the specifications of the hand-rolled food are different, which cannot guarantee a high yield. During processing, a blank is first prepared, which includes a wrapping skin 901 and a filling 902. As shown in FIG. 1, the sheet-shaped wrapping skin 901 is flattened, and the filling 902 is placed on and near a corner of the wrapping skin 901 to form a primary blank 91. If the corner of the wrapping skin 901 close to the filling 902 is further folded up to cover the filling 902, a secondary blank 92 is formed, as shown in FIG. 2. The primary blank 91 can be formed easily in the prior art, but before forming the secondary blank 92 by machining, it is necessary to firstly adjust the angle of the primary blank 91 or the angle of the wrapping skin 901, and then place the filling 902 therein to form the primary blank 901, so as to facilitate subsequent cornering operations. As shown in FIG. 3, for example, the primary blank 91 is transported forward through a first feeding device. When the corner of the wrapping skin 901 close to the filling 902 needs to be folded up by a subsequent flanging mechanism, it is necessary to enable the corner close to the filling 902 (referred to as a first corner 901a) to face the flanging mechanism. This requires the wrapping skin 901 to be rotated by a certain angle, for example 45°, as shown in FIG. 20. The wrapping skin 901 can be sucked by a negative pressure suction device and then rotated, but the filling 902 on the wrapping skin 901 is easily thrown out during rotation. There is no other better way to rotate the wrapping skin 901.

### SUMMARY

Therefore, an object of the present invention is to provide an angle adjustment method and angle adjustment mechanism for food blanks which can adjust the angle of the food blanks.

In order to achieve the above object, an angle adjustment method for food blanks according to the present invention includes the following steps:
fixing a fixing device to a first corner of a wrapping skin at a first station such that the fixing device and the wrapping skin are capable of acting synchronously;
driving the fixing device to move to a second station by a moving driving member to drag the wrapping skin; and
driving the fixing device to rotate by a rotation driving member in the process of dragging the wrapping skin,.

The present invention also provides an angle adjustment mechanism for food blanks, including:
a platen configured to hold a wrapping skin;
a fixing device configured to be fixed to a first corner of the wrapping skin at a first station;
a moving driving member connected to the fixing device and configured to drive the fixing device to drag the wrapping skin to move to a second station; and
a rotation driving member connected to the fixing device and capable of driving the fixing device to rotate to a preset angle in the process of dragging the wrapping skin.

By adopting the above technical solutions, in the angle adjustment method and angle adjustment mechanism for food blanks according to the present invention, the fixing device is fixed at the first corner of the wrapping skin, then the fixing device is driven to move, and the fixing device is rotated in the process whereby the fixing device drags the wrapping skin to move to a second station. Since the fixing device and the wrapping skin act synchronously, the wrapping skin rotates synchronously when the fixing device rotates. When the fixing device moves to the second station, the wrapping skin is dragged to the second station, and at the same time, the wrapping skin is also rotated to a specified angle. The angle adjustment method and angle adjustment mechanism for food blanks according to the present invention can adjust the angle of the food blanks and rotate the first corner of the wrapping skin to a specified angle for the convenience of subsequent processing steps. In addition, the wrapping skin has high angle adjustment accuracy, and the angle adjustment mechanism operates stably, which can greatly avoid damage to the wrapping skin and avoid throwing off the filling from the wrapping skin.

### BRIEF DESCRIPTION OF THE DRAWINGS

FIG. 1 is a schematic structural diagram of a primary blank.
FIG. 2 is a schematic structural diagram of a secondary blank.
FIG. 3 is a schematic diagram of an embodiment of an angle adjustment mechanism for food blanks according to the present invention.
FIG. 4 is a partial enlarged view of part A in FIG. 3.
FIG. 5 is a schematic diagram of the state of an angle adjustment operation when the primary blank is sent to a first station.
FIG. 6 is a partial enlarged view of part B in FIG. 5.
FIG. 7 is a schematic diagram of the primary blank on a platen.
FIG. 8 is a plan view of FIG. 7.
FIG. 9 is a schematic diagram showing a steering direction of a wrapping skin, an orientation of a first angle, and a moving direction of a fixing device.
FIG. 10 is a schematic diagram of a second state of the angle adjustment operation.
FIG. 11 is a schematic diagram of an installation structure of a sleeve and a first needle.
FIG. 12 is another perspective view of FIG. 10.
FIG. 13 is a schematic diagram of a third state of the angle adjustment operation.
FIG. 14 is another perspective view of FIG. 13.
FIG. 15 is a schematic structural diagram of an air blowing device.
FIG. 16 is a schematic diagram of a fourth state of the angle adjustment operation.
FIG. 17 is a schematic diagram of another embodiment of a fixing device and a rotation driving member.
FIG. 18 is another perspective view of FIG. 17.
FIG. 19 is a schematic diagram of another embodiment of the rotation driving member.

### DETAILED DESCRIPTION

The present invention will be further described in detail below with respect to the accompanying drawings and specific embodiments.

As shown in FIGS. 3-6, an angle adjustment mechanism for food blanks according to the present invention includes a platen 11, a fixing device, a moving driving member, and a rotation driving member. A cutting device 7 is provided on a second conveying device 8 for cutting a raw skin into a plurality of wrapping skins 901. A filling 902 may be placed on the wrapping skin 901 before or after the cutting. The second conveying device 8 conveys a primary blank 91 to the platen 11, and locates a first corner of the wrapping skin 901 at a first station M1 on the platen 11.

In this embodiment, the second conveying device 8 transfers three cut wrapping skins 901 to the platen 11 at one time, such that an angle adjustment operation can be performed on the three wrapping skins 901 at the same time. It is not limited to this way in other embodiments.

The fixing device is configured to be fixed to the first corner 901a of the wrapping skin 901 at the first station M1. The moving driving member is configured to drive the fixing device to drag the wrapping skin 901 to move to a second station M2. The rotation driving member is configured to drive the fixing device to rotate to a preset angle in the process of dragging the wrapping skin 901.

The fixing device is fixed at the first corner 901a of the wrapping skin 901, and then fixing deviceis driven to move. The fixing device is rotated in the process of fixing device dragging the wrapping skin 901 by the fixing device to move to the second station M2. Since the fixing device and the wrapping skin 901 act synchronously, the wrapping skin 901 rotates synchronously when the fixing device rotates. When the fixing device moves to the second station M2, the wrapping skin 901 is dragged to the second station M2, and at the same time, the wrapping skin 901 is also rotated to a specified angle.

A plurality of fixing devices have divergent trajectories of moving from the first station M1 to the second station M2, so as to drag the wrapping skin 901 to move in directions away from each other. When the angle adjustment operation is completed, distances among the plurality of wrapping skins 901 are also widened, so as to facilitate the arrangement of the equipment in the subsequent process.

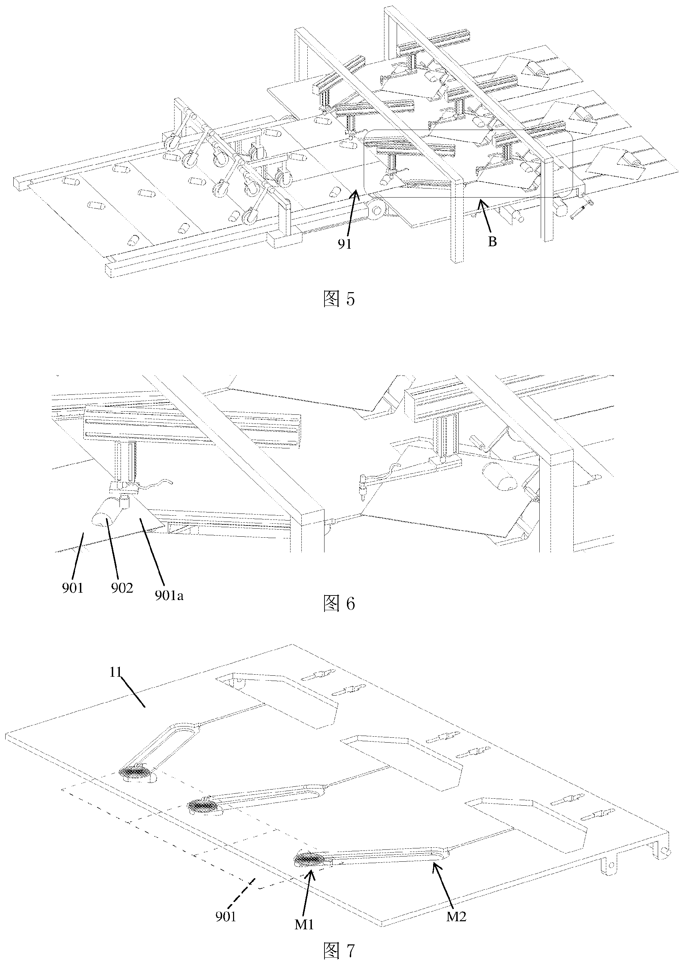

As shown in FIGS. 7-9, taking a direction F1 of the first corner 901a as the front, when a rotating direction F2 of the first corner 901a is leftward, the second station M2 is located at the front left of the first station M1. A moving direction F3 of the fixing device is this direction. Similarly, when the first corner 901a needs to be rotated to the right, the second station M2 is located at the right front of the first station M1. Therefore, when being dragged, the wrapping skin 901 will rotate in the rotating direction F2 under the action of a frictional force with the platen 11 and a pulling force of the fixing device.

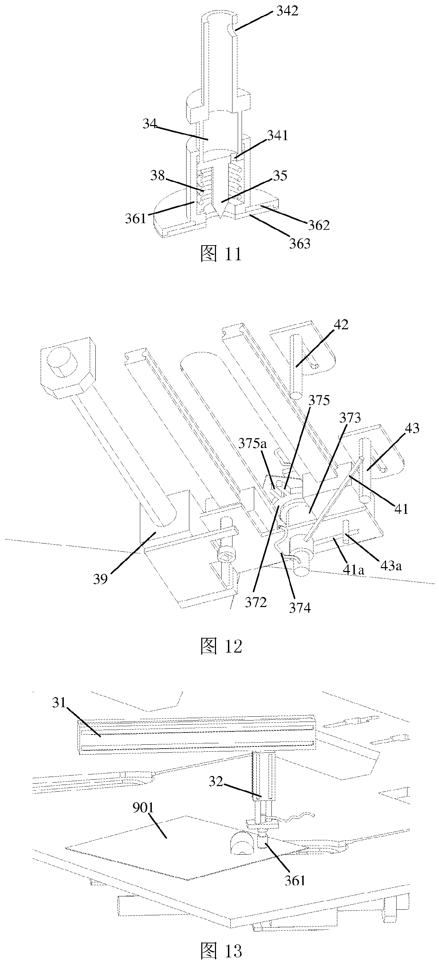

As shown in FIGS. 3-4 and FIGS. 10 to 12, a moving driving member including a third cylinder 31 is disposed above the platen 11. The third cylinder 31 may be a linear cylinder. A long groove 119 is provided on the platen 11. A driving direction of the third cylinder 31 coincides with an extending direction of the long groove 119. The third cylinder 31 is mounted with a clamping driving member, including a fourth cylinder 32. A cylinder arm of the fourth cylinder 32 is provided with a mounting seat 33 at a lower end. An upper air guide 34 is fixed on the mounting seat 33, and a first needle 35 is fixed at a lower end of the upper air guide 34. As shown in FIG. 11, the lower end of the upper air guide 34 is provided with an air outlet hole 341, and the upper portion is provided with a connection hole 342 for connecting an upper air blowing tube 343.

The fixing device includes an upper clamping portion 36 and a lower clamping portion 37. The fourth cylinder 32 can drive the upper clamping portion 36 to rise and fall. The first station M1 and the second station M2 are located on a trajectory of the long groove 119. The lower clamping portion 37 can cooperate with the upper clamping portion 36 by passing through the long groove 119 to clamp and fix the wrapping skin 901 therein. The clamping driving member drives the upper clamping portion 36 and the lower clamping portion 37 to clamp.

The lower clamping portion 37 is provided with a needle hole 371 for insertion of the first needle 35. The first needle 35 is inserted into the needle hole 371, such that when the moving driving member drives the upper clamping portion 36 to move, a driving force can be transmitted to the lower clamping portion 37 through the first needle 35, and then the upper clamping portion 36 and the lower clamping portion 36 can move synchronously. In this embodiment, the upper clamping portion 36 includes a sleeve 361, and the first needle 35 is disposed inside the sleeve 361. An elastic return member acts on the first needle 35 and the sleeve 361 respectively, and when the first needle 35 moves downward relative to the sleeve 361, the elastic return member starts to accumulate energy. The elastic return member may include a return spring 38, one end of which is pressed against the sleeve 361, and the other end is pressed against the bottom of the upper air guide 34. When the fourth cylinder 32 drives the sleeve 361 and the first needle 35 to move down, a lower edge of the sleeve 361 can be pressed against the wrapping skin 901. The first needle 35 is inserted into the needle hole 371 of the lower clamping portion 37 after passing through the wrapping skin 901. When the wrapping skin 901 rotates in the process of being dragged, the sleeve 361 and the first needle 35 can rotate relative to each other. The sleeve 361 includes a press ring 362 at a lower end and a rubber press sheet 363 arranged on the press ring 362. The press ring 362 and the rubber press sheet 363 can increase the contact area with the wrapping skin and make the clamping more stable.

A supporting member 119a, which is an eaves portion recessed downward in this embodiment, is provided at the edge position of the long groove 119 to support the lower clamping portion 37. The lower clamping portion 37 includes a circular plate 372 in contact with the wrapping skin 901 and a lower air guide 373 fixed under the circular plate 372. The needle hole 371 is located in the middle of the circular plate 372 and communicates with the lower air guide 373. The circular plate 372 is placed on the eaves portion 119a. An upper surface of the circular plate 372 is provided with an anti-slip structure, such as an anti-slip pattern 372a, to increase friction thereof with the wrapping skin 901. A similar anti-slip structure may also be provided on a lower end surface of the sleeve 361.

The upper air guide 34 and the lower air guide 373 are respectively connected to the upper air blowing tube 343 and the lower air blowing tube 374 to form an air blowing structure to blow air to the wrapping skin 901, so as to avoid adhesion of the upper the wrapping skin 901 with clamping portion 36 and the lower clamping portion 37.

The lower clamping portion 37 is also connected with a moving return device, which may be a return cylinder 39 for driving the lower clamping portion 37 to return to the first station M1. It is also possible not to provide such a separate moving return device, and instead drive the lower clamping portion 37 to return by the moving driving member.

At the edge position of the circular plate 372, there is provided a holding block portion 375 that protrudes outward radially. When the lower clamping portion 37 is located at the first station M1, the holding block portion 375 protrudes toward the tip of the first corner 901a to hold the edge of the first corner 901a. In addition, a through groove 375a extending radially outward is provided on the holding block portion 375 and extends to the edge of the holding block portion 375. After the angle adjustment operation is completed, the second needle 14 is inserted into the through groove 375a after passing through the wrapping skin 901 to pull the wrapping skin 901 out. An accommodating groove 119b for accommodating the holding block portion 375 is provided on the edge of the long groove 119 at the second station.

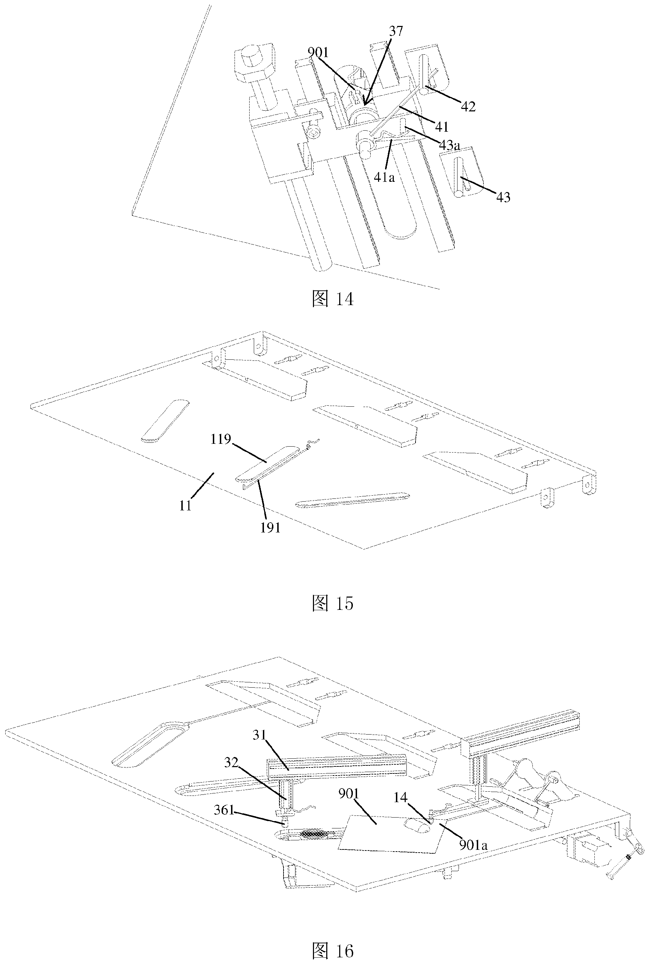

As shown in FIG. 15, an air blowing device 191 may also be arranged below the long groove 119 to blow air upward, so as to blow air to the wrapping skin 901 located above the long groove 119 to prevent the wrapping skin 901 from partially falling into the long groove 119 when being dragged to the top of the long groove 119.

The rotation driving member includes a steering portion arranged on the fixing device and a guiding portion capable of cooperating with the steering portion. The guiding portion is located on a moving trajectory of the steering portion and can limit and guide a part of the guiding portion which is away from a rotation axis thereof.

As shown in FIG. 12, the steering portion includes a cross bar 41, and the guiding portion includes a front blocking portion 42 and a rear blocking portion 43. When the lower clamping portion 37 moves to the second station M2, the cross bar 41 moves forward together. When the cross bar 41 touches the front blocking portion 42, the lower clamping portion 37 rotates due to being blocked, thereby driving the wrapping skin 901 to rotate together. In order to realize return, the lower clamping portion 37 moves to the first station M1. Similarly, the rear blocking portion 43 is configured to rotate the lower clamping portion 37 back to an initial angle. In order to prevent excessive rotation, the lower clamping portion 37 is further provided with a short lever 41a at an angle of 45°with respect to the cross bar 41. The lower clamping portion 37 moves synchronously with a horizontal mounting plate. A return blocking portion 43a is also provided on the horizontal mounting plate. When the lower clamping portion 37 performs return movement, the return blocking portion 43a can block the short lever 41a.

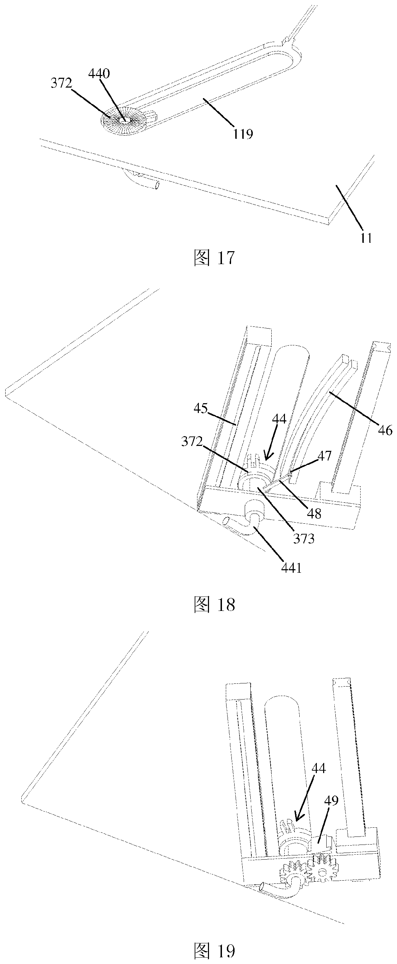

In another embodiment, as shown in FIGS. 17 and 18, the fixing device includes a negative pressure suction device 44. The negative pressure suction device 44 includes a circular plate 372, a lower air guide 373 located below the circular plate 372, and a negative pressure tube 441 connected to the lower air guide 373. A negative pressure suction port 440 is provided on the circular plate 372. The negative pressure suction port 440 is communicated with a negative pressure tube 441, and the wrapping skin 901 is fixed and pressed on the circular plate 372 by means of negative pressure adsorption. The moving driving member includes a fifth cylinder 45 to drive the negative pressure suction device 44 to move. The guiding portion includes a guiding groove 46. The steering portion includes a guiding block 47 located in the guiding groove 46 and a connecting rod 48 with one end fixed to the fixing device and the other end mounted with the guiding block 47.

In another embodiment, as shown in FIG. 19, the rotation driving member includes a rotating motor 49. The negative pressure suction device 44 is connected to a power output of the rotating motor 49, and drives the negative pressure suction device 44 to rotate through the action of the rotating motor 49.

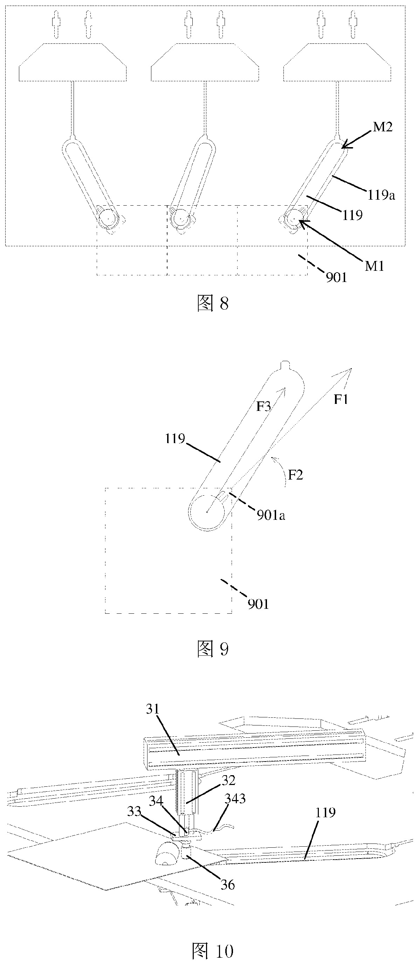

As shown in FIGS. 10 and 12, after the wrapping skin 901 is sent to the platen 11 by the second conveying device 8, the lower clamping portion 37 is located below the wrapping skin 901. The fourth cylinder 32 drives the upper clamping portion 36 to move downward to clamp and fix the wrapping skin 901, and the first needle 35 is inserted into the needle hole 371 of the lower clamping portion 37 after passing through the wrapping skin 901.

As shown in FIGS. 13 and 14, the third cylinder 31 drives the fixing device to move in the direction of the long groove 119. When the cross bar 41 touches the front blocking portion 42, the lower clamping portion 37 is rotated by the action of the cross bar 41, and simultaneously drives the wrapping skin 901 and the upper clamping portion 36 to rotate together.

As shown in FIG. 16, when the fixing device moves to the second station M2, the wrapping skin 901 of the primary blank 91 rotates to a specified angle, the second needle 14 moves downward and penetrates into the wrapping skin 901, and the upper clamping portion 36 is lifted up and moves in the return direction.

It would be understood that the above embodiments are merely examples for clear illustration rather than limitation. Those skilled in the art can make other different forms of changes or modifications on the basis of the above description. The obvious changes or alternations derived from this all belong to the scope of protection of the present invention.

## Claims

1. An angle adjustment method for food blanks, comprising:
fixing a fixing device to a first corner of a wrapping skin at a first station such that the fixing device and the wrapping skin are capable of acting synchronously;
driving the fixing device to move to a second station by a moving driving member to drag the wrapping skin; and
driving the fixing device to rotate by a rotation driving member in the process of dragging the wrapping skin,.

2. The angle adjustment method for food blanks according to claim 1, wherein, in case an orientation of the first corner is defined as the front, a moving direction of the fixing device is the left front when the first corner is to be rotated to the left, and the moving direction of the fixing device is the right front when the first corner is to be rotated to the right.

3. The angle adjustment method for food blanks according to claim 1 or 2, wherein a raw material skin is cut by a plurality of cutting knives arranged at intervals in parallel to form a plurality of wrapping skins arranged in parallel, the plurality of wrapping skins are simultaneously fed into a plurality of first stations arranged in parallel, and the plurality of wrapping skins are dragged in dispersed directions by a plurality of fixing devices.

4. An angle adjustment mechanism for food blanks, comprising:
a platen configured to hold a wrapping skin;
a fixing device configured to be fixed to a first corner of the wrapping skin at a first station;
a moving driving member connected to the fixing device and configured to drive the fixing device to drag the wrapping skin to move to a second station; and
a rotation driving member connected to the fixing device and capable of driving the fixing device to rotate at a preset angle in the process of dragging the wrapping skin.

5. The angle adjustment mechanism for food blanks according to claim 4, wherein the fixing device comprises an upper clamping portion and a lower clamping portion, a long groove is provided on the platen, the first station and the second station are located on a trajectory of the long groove, and the lower clamping portion is capable of passing through the long groove and cooperating with the upper clamping portion to clamp and fix the wrapping skin therein.

6. The angle adjustment mechanism for food blanks according to claim 5, wherein a first needle and a needle hole are respectively provided on the upper clamping portion and the lower clamping portion, and the first needle is capable of being inserted into the needle hole such that the upper clamping portion and the lower clamping portion move synchronously under the driving of the moving driving member.

7. The angle adjustment mechanism for food blanks according to claim 6, wherein the platen comprises a supporting member for supporting the lower clamping portion; and the upper clamping portion is mounted on a clamping driving member which is configured to drive the upper clamping portion to rise and fall, and the moving driving member is configured to drive the upper clamping portion to move.

8. The angle adjustment mechanism for food blanks according to claim 7, wherein the lower clamping portion is connected to a moving return device.

9. The angle adjustment mechanism for food blanks according to claim 7, wherein the upper clamping portion comprises a sleeve in which the first needle is disposed, an elastic return member acts on the first needle and the sleeve respectively, and when the first needle moves downward relative to the sleeve, the elastic return member starts to accumulate energy.

10. The angle adjustment mechanism for food blanks according to claim 5, wherein the upper clamping portion and/or the lower clamping portion is further provided with an air blowing structure.

11. The angle adjustment mechanism for food blanks according to claim 5, wherein an anti-slip structure is provided on surface of the upper clamping portion and/or the lower clamping portion contacting the wrapping skin.

12. The angle adjustment mechanism for food blanks according to claim 5, wherein the lower clamping portion comprises a holding block portion protruding outward radially, and the holding block portion protrudes toward a tip of the first corner when the lower clamping portion is located at the first station.

13. The angle adjustment mechanism for food blanks according to claim 12, wherein a through groove extending radially outward to an edge of the holding block portion is provided on the holding block portion.

14. The angle adjustment mechanism for food blanks according to claim 5, wherein an air blowing device is provided below the long groove.

15. The angle adjustment mechanism for food blanks according to any one of claims 4-14, wherein the first station and the second station are located on the platen; and in case an orientation of the first corner defines the front, the second station is located at the left front of the first station when the first corner is to be rotated to the left, and the second station is located at the right front of the first station when the first corner is to be rotated to the right.

16. The angle adjustment mechanism for food blanks according to any one of claims 4 to 14, wherein the rotation driving member comprises a steering portion provided on the fixing device and a guiding portion capable of cooperating with the steering portion, the guiding portion being located on a moving trajectory of the steering portion and capable of limiting and guiding a part of the guiding portion, the part being away from a rotation axis of the guiding portion.

17. The angle adjustment mechanism for food blanks of claim 16, wherein the steering portion comprises a cross bar, and the guiding portion comprises a blocking portion.

18. The angle adjustment mechanism for food blanks according to claim 16, wherein the guiding portion comprises a guiding groove, and the steering portion comprises a guiding block located in the guiding groove and a connecting rod with one end fixed to the fixing device and the other end mounted to the guiding block.

19. The angle adjustment mechanism for food blanks according to any one of claims 4-14, wherein a plurality of first stations and a plurality of second stations are arranged in parallel on the platen with a plurality of fixing devices, a plurality of moving driving members, and a plurality of rotation driving members being correspondingly provided; and trajectories of the plurality of fixing devices moving from the first station to the second station are distributed divergently.
